# EUROPÄISCHE PATENTSCHRIFT

(11) **EP 2 013 121 B1**
(45) Veröffentlichungstag und Bekanntmachung des Hinweises auf die Patenterteilung: **23.06.2010**
(21) Anmeldenummer: 07724398.8
(22) Anmeldetag: 20.04.2007
(51) Int. Cl.: B65G 47/91

(54) **VERFAHREN UND MASCHINELLE ANORDNUNG ZUM HANDHABEN EINES WERKSTÜCKES MIT ZUMINDEST EINER DURCHTRITTSÖFFNUNG**
PROCEDURE AND MECHANICAL CONFIGURATION FOR THE HANDLING OF A COMPONENT WITH AT LEAST ONE PASSAGE OPENING
PROCÉDÉ ET DISPOSITIF MÉCANIQUE DESTINÉS À MANIPULER UNE PIÈCE USINÉE AVEC AU MOINS UN ORIFICE DE PASSAGE

(30) Priorität: 28.04.2006 DE 102006019767
(43) Veröffentlichungstag der Anmeldung: 14.01.2009
(73) Patentinhaber: TRUMPF Werkzeugmaschinen GmbH + Co. KG, 71254 Ditzingen (DE)
(72) Erfinder: KILIAN, Friedrich, 71229 Leonberg (DE)
(74) Vertreter: Kohler Schmid Möbus
(86) Internationale Anmeldenummer: PCT/EP2007/003461
(87) Internationale Veröffentlichungsnummer: WO 2007/124876

(56) Entgegenhaltungen:
- DE-A1-102004 016 637
- FR-A1- 2 561 221

## Beschreibung

Die Erfindung betrifft ein Verfahren zum Handhaben eines Werkstückes mit zumindest einer Durchtrittsöffnung, wobei wenigstens ein Sauger und das Werkstück unter Ausbildung einer Saugkammer aneinander angelegt werden und in der Saugkammer ein Unterdruck erzeugt wird, um das Werkstück und den Sauger für ein anschließendes Manipulieren des Werkstückes mit einer Haltekraft aneinander festzulegen. Des Weiteren betrifft die Erfindung eine maschinelle Anordnung zum Handhaben eines Werkstückes mit zumindest einer Durchtrittsöffnung, wobei die maschinelle Anordnung einen Sauger aufweist und der Sauger und das Werkstück unter Ausbildung einer Saugkammer aneinander anlegbar sind und in der Saugkammer mittels eines Unterdruckerzeugers der maschinellen Anordnung ein Unterdruck erzeugbar ist, um das Werkstück und den Sauger für ein anschließendes Manipulieren des Werkstückes mit einer Haltekraft aneinander festzulegen.

Derartige Verfahren und derartige maschinelle Anordnungen werden häufig in der Blechbearbeitung eingesetzt. Dort müssen beispielsweise von einem Blechstapel Bleche einer Bearbeitungsmaschine zugeführt werden. Hierzu wird zumindest ein Sauger unter Ausbildung einer Saugkammer an das oberste Blech des Blechstapels angelegt. Durch Erzeugen eines Unterdrucks in der Saugkammer werden das Blech und der Sauger aneinander festgelegt. Das festgelegte Blech kann nun beispielsweise mittels eines Manipulators, der den Sauger trägt, einer Blechbearbeitungsmaschine zugeführt werden. Häufig weisen die zu handhabenden Bleche eine Vielzahl von Durchtrittsöffnungen auf. Wird nun ein Sauger auf ein derartiges Lochblech aufgesetzt, kann es vorkommen, dass zumindest eine Durchtrittsöffnung in die sich dabei ausbildende Saugkammer mündet. Beim Anlegen eines Unterdrucks an die Saugkammer kann sich in diesem Fall kein ausreichender Unterdruck in der Saugkammer ausbilden, um das Werkstück und den Sauger sicher aneinander festzulegen.

Gattungsgemäßer Stand der Technik ist bekannt aus DE 36 37 567 A1 sowie aus FR 2 561 221 A1.

DE 36 37 567 A1 beschreibt ein Verfahren, im Rahmen dessen mehrere Sauger auf ein Werkstück mit Durchtrittsöffnungen aufgesetzt werde. Mittels einer Absperreinrichtung der einzelnen Sauger wird erreicht, dass nur diejenigen Sauger mit einer Unterdruckquelle verbunden werden, die sich nicht über einer Durchtrittsöffnung befinden. Auch mit einem Unterdruckerzeuger üblicher Leistung wird somit zumindest in den Saugkammern, die sich über einer geschlossenen Werkstückoberfläche befinden, ein ausreichender Unterdruck erzeugt.

FR 2 561 221 A1 betrifft ein Verfahren und eine maschinelle Anordnung zum Handhaben von Lochblechen mit Hilfe einer Saugeinrichtung. Die Saugeinrichtung weist eine Saugerplatte auf, an welcher eine Mehrzahl von Saugkammern ausgebildet ist. Sämtliche Saugkammern sind an eine Unterdruckquelle angeschlossen. Zu diesem Zweck mündet in jede Saugkammer ein Leitungsabschnitt einer Leitung, über welche die jeweilige Saugkammer mit der Unterdruckquelle verbunden ist. An ihrer dem zu handhabenden Lochblech zugewandten Seite ist die Saugerplatte mit einer flexiblen Membran versehen, die eine Vielzahl von Löchern aufweist. Zum Handhaben eines Lochblechs wird die Saugeinrichtung an die Blechoberfläche derart angelegt, dass sich die flexible Membran zwischen dem Lochblech und den Saugkammern der Saugerplatte befindet. Danach wird die Unterdruckquelle betätigt. Liegen eine Saugkammer und die in diese mündenden Löcher der flexiblen Membran über einem Loch des Lochbleches, so saugt die Unterdruckquelle über den in die betreffende Saugkammer mündenden Leitungsabschnitt Luft an, welche von der gegenüberliegenden Seite des Lochbleches her durch das von der Saugkammer überdeckte Loch des Lochblechs sowie durch die in die Saugkammer mündenden Löcher der flexiblen Membran in Richtung auf die Unterdruckquelle strömt. Aufgrund des Luftstroms wird die flexible Membran über dem Loch des Lochbleches angehoben bis sie die Mündung des in die Saugkammer mündenden Leitungsabschnittes verschließt und dadurch einen weiteren Luftstrom unterbindet. Aufgrund der Blockierung des Luftstroms in die über dem Loch des Lochblechs angeordnete Saugkammer kann sich in einer anderen, über einem geschlossenen Bereich des Lochblechs angeordneten Saugkammer ein Unterdruck aufbauen, aufgrund dessen die Saugeinrichtung auf das Lochblech ein Haltekraft ausübt.

Der Einsatz der vorbekannten Verfahren oder der vorbekannten maschinellen Anordnungen ist auf Werkstücke beschränkt, deren Werkstückoberfläche ausreichend große Bereiche ohne Durchtrittsöffnungen aufweist.

Die Aufgabe der Erfindung besteht darin, ein Verfahren und eine maschinelle Anordnung bereitzustellen, deren Einsatzmöglichkeiten gegenüber dem Stand der Technik erweitert sind.

Diese Aufgabe wird durch das Verfahren nach Patentanspruch 1 sowie durch die maschinelle Anordnung nach Patentanspruch 9 gelöst. Im Sinne der Erfindung wird zumindest eine in eine Saugkammer mündende Durchtrittsöffnung des Werkstückes wenigstens teilweise mit einer Abdeckung versehen, um nach dem Erzeugen eines Unterdrucks in der Saugkammer den Luftdurchfluss durch die Durchtrittsöffnung zur Saugkammer hin zu reduzieren. Dadurch wird gewährleistet, dass in dieser Saugkammer ein ausreichender Unterdruck erzeugt wird, um das Werkstück und den Sauger mit einer Haltekraft aneinander festzulegen. Mittels der Abdeckung der Durchtrittsöffnung kann hinreichend vermieden werden, dass nach Erzeugen eines Unterdrucks in der Saugkammer Luft durch die Durchtrittsöffnung in die Saugkammer strömt. Damit bleibt das Werkstück auch beim anschließenden Manipulieren des Werkstückes sicher am Sauger festgelegt. Die zumindest eine Durchtrittsöffnung des Werkstückes kann sowohl auf der dem Sauger zugewandten Werkstückseite als auch auf der dem Sauger abgewandten Werkstückseite mit der Abdeckung versehen werden. Die zumindest eine Durchtrittsöffnung des Werkstückes kann aber auch auf beiden vorgenannten Werkstückseiten mit einer erfindungsgemäßen Abdeckung versehen werden. Im Falle der erfindungsgemäßen maschinellen Anordnung werden das Werkstück und der Sauger mit einer Haltekraft aneinander festgelegt, indem zumindest eine in die Saugkammer mündende Durchtrittsöffnung des Werkstückes wenigstens teilweise mit einer Abdeckung versehbar ist, um nach dem Erzeugen des Unterdruckes den Luftdurchfluss durch die Durchtrittsöffnung zur Saugkammer hin zu reduzieren.

Besondere Ausführungsarten des Verfahrens nach Anspruch 1 ergeben sich aus den abhängigen Ansprüchen 2 - 8. Besondere Ausführungsarten der maschinellen Anordnung nach Anspruch 9 sind den abhängigen Ansprüchen 10 und 11 zu entnehmen.

Nach Anspruch 2 dient das erfindungsgemäße Verfahren vorteilhaft zum Handhaben eines ebenen Werkstückes. So muss bei der Gestaltung oder der Anbringung der Abdeckung kein besonderer Verlauf der Werkstückoberfläche berücksichtigt werden. Besonders vorteilhaft dient das erfindungsgemäße Verfahren zum Handhaben eines Lochbleches. Ein Lochblech ist ein Blech, das eine Vielzahl von Durchtrittsöffnungen senkrecht zur Werkstückhauptebene besitzt. In diesem Fall kann die erfindungsgemäße Abdeckung in einfacher Weise auf der Lochblechoberseite und/oder auf der Lochblechunterseite angebracht werden.

Vorteilhafterweise wird nach Patentanspruch 3 im Rahmen des erfindungsgemäßen Verfahrens die Abdeckung mit dem Werkstück lösbar verbunden. Somit kann die Abdeckung abschließend vom Werkstück entfernt werden. Ein besonders einfaches und flexibles Verfahren ergibt sich, wenn die Abdeckung auf eine Werkstückseite geklebt wird.

Im Falle der Variante des erfindungsgemäßen Verfahrens nach Patentanspruch 4 wird die Durchtrittsöffnung mit einer flächigen Abdeckung versehen. Eine flächige Abdeckung hat den Vorteil, dass sie bei geringem Platzbedarf einen großen Bereich einer Werkstückseite und somit gegebenenfalls eine Vielzahl von Durchtrittsöffnungen abdecken kann. Wird als flächige Abdeckung eine Folie eingesetzt, so hat diese zudem den Vorteil, dass sie sich flexibel an das Werkstück anpassen lässt.

Bei einer materialsparenden Variante wird nur derjenige Bereich des Werkstückes mit einer Abdeckung versehen, an dem die Sauger angelegt werden. Demgegenüber hat das erfindungsgemäße Verfahren nach Patentanspruch 5, bei dem eine Werkstückseite im Wesentlichen vollständig mit einer Abdeckung versehen wird, den Vorteil einer vereinfachten Durchführung.

Im Falle von Werkstücken, die in gestapelter Form angeordnet sind , kann das erfindungsgemäße Verfahren vorteilhaft nach Patentanspruch 6 und 7 weiterentwickelt werden. Bei einem Verfahren nach Patentanspruch 6 wird zumindest eine Durchtrittsöffnung eines Werkstücks z. B. beim Stapeln wenigstens teilweise mit einer Abdeckung versehen. In besonders einfacher Weise kann dies erfolgen, indem die Werkstücke mit als Abdeckungen dienenden Zwischenlagen abwechselnd gestapelt werden. In dem Fall, dass die Werkstücke ohne Abdeckungen in gestapelter Form bereitgestellt werden, kann das Verfahren gemäß Patentanspruch 7 vorteilhaft weiterentwickelt werden. Zumindest eine Durchtrittsöffnung des Werkstückes wird vor oder bei oder nach einem Entstapeln des Werkstückes wenigstens teilweise mit einer Abdeckung versehen. So kann das auf einem Stapel zuoberst liegende Werkstück zunächst auf der Werkstückoberseite mit einer Abdeckung versehen werden, um es anschließend mit einer erhöhten Sicherheit anzusaugen und dem Stapel zu entnehmen. Aus zeitlichen Gründen kann es auch vorteilhaft sein, das Werkstück beim Herabschieben von dem Stapel gleichzeitig mit der Abdeckung zu versehen. Andernfalls kann das Werkstück aber auch, bevor es mit einer Abdeckung versehen wird, aus dem Stapel durch beispielsweise eine Ausschiebeeinheit entnommen werden. In diesem Fall ist das Werkstück für das Anbringen der erfindungsgemäßen Abdeckung besser zugänglich.

Im Rahmen des Verfahrens nach Patentanspruch 8 wird bei einem sich an das gegenseitige Festlegen von Sauger und Werkstück anschließenden Manipulieren das mit einer erfindungsgemäßen Abdeckung versehene Werkstück einer Bearbeitungsvorrichtung zugeführt. Dabei kann die erfindungsgemäße Abdeckung vorteilhafterweise dazu dienen, ein materialschonendes Bearbeiten des Werkstückes zu ermöglichen, indem das Werkstück durch die Abdeckung vor unerwünschten Beeinträchtigungen, wie Kratzern oder Abdrücken, geschützt wird.

Nach Patentanspruch 10 beinhaltet die erfindungsgemäße maschinelle Anordnung eine Abdeckeinheit, um zumindest eine Durchtrittsöffnung wenigstens teilweise mit einer Abdeckung zu versehen. Dadurch erhöht sich der Automatisierungsgrad der maschinellen Anordnung.

In der Ausgestaltung der maschinellen Anordnung nach Patentanspruch 11 ist die vorgenannte Abdeckeinheit an einer Entstapelungseinheit angeordnet. Damit ergibt sich eine kompakte maschinelle Anordnung zum Handhaben von Werkstücken.

Nachstehend wird die Erfindung anhand beispielhafter schematischer Darstellungen näher erläutert. Es zeigen:
- Figur 1: eine schematische Darstellung eines Verfahrens zum Handhaben eines Werkstückes mit Hilfe eines Saugers,
- Figuren 2a bis 2c: schematische Schnittdarstellungen eines Werkstückes und eines Saugers, die aneinander festgelegt werden,
- Figur 3: eine schematische Darstellung einer ersten maschinellen Anordnung zum Handhaben eines Werkstückes und
- Figur 4: eine schematische Darstellung einer zweiten maschinellen Anordnung zum Handhaben eines Werkstückes.

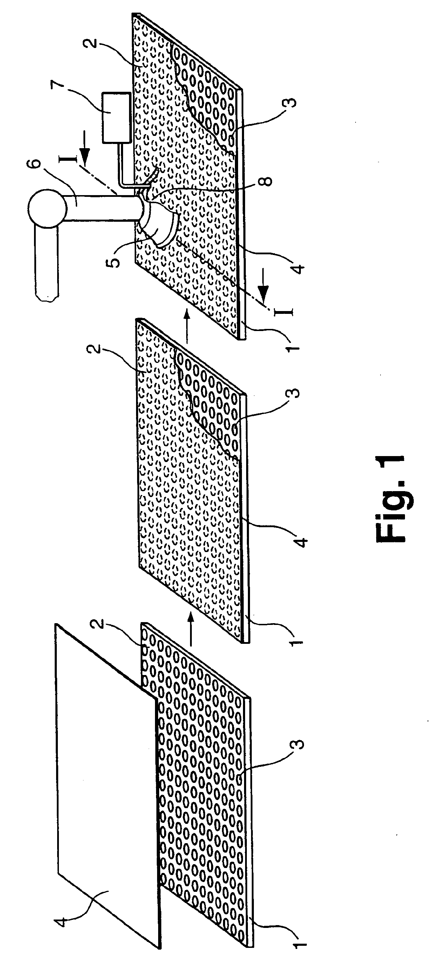

Figur 1 zeigt ein Werkstück in Form eines Lochbleches 1. Bei dem Lochblech 1 handelt es sich um ein ebenes Werkstück, das heißt ein Werkstück mit einer ebenen Werkstückoberseite 2. Das Lochblech 1 weist eine Vielzahl von Durchtrittsöffnungen 3 senkrecht zur Werkstückhauptebene auf. Die Werkstückoberseite 2 besitzt keine größeren Bereiche ohne Durchtrittsöffnungen 3.

Eine Abdeckung in Form einer Folie 4 wird auf die Werkstückoberseite 2 des Lochbleches 1 aufgeklebt. Die Folie 4 besteht aus einem weitgehend luftundurchlässigen Kunststoff. Grundsätzlich können aber Form und Materialbeschaffenheit der Abdeckung den jeweiligen Anforderungen angepasst werden. Es muss nur gewährleistet sein, dass der Luftdurchfluss durch die Durchtrittsöffnungen 3 mittels der Abdeckung reduziert werden kann. Eine kostengünstige Variante stellt eine Abdeckung aus Papier dar.

Die Folie 4 bedeckt im dargestellten Fall die Werkstückoberseite 2 im Wesentlichen vollständig. Die Folie 4 ist in Figur 1 nur zur besseren Veranschaulichung teilweise abgebrochen und transparent dargestellt.

Des Weiteren zeigt Figur 1 einen Sauger 5, der von einem Manipulatorarm 6 getragen wird und mit einem Unterdruckerzeuger 7 verbunden werden kann. Der Sauger 5 und der Manipulatorarm 6 sind Teile einer maschinellen Anordnung, die nachstehend im Einzelnen beschrieben wird.

Wie schematisch in Figur 1 dargestellt ist, wird zunächst das Lochblech 1 mit der Folie 4 versehen. Anschließend werden der Sauger 5 und das mit der Folie 4 versehene Lochblech 1 unter Ausbildung einer Saugkammer 8 aneinander angelegt. Dann wird mittels des Unterdruckerzeugers 7 ein Unterdruck in der Saugkammer 8 erzeugt. Die Folie 4 verhindert, dass durch die in die Saugkammer 8 mündenden Durchtrittsöffnungen 3 Luft in die Saugkammer 8 strömt. Dadurch kann sich ein Unterdruck ausbilden, mittels dessen der Sauger 5 und das Lochblech 1 mit einer Haltekraft aneinander festgelegt werden. Die Haltekraft ist ausreichend, um das Lochblech 1 beim anschließenden Manipulieren an dem Sauger 5 zu halten.

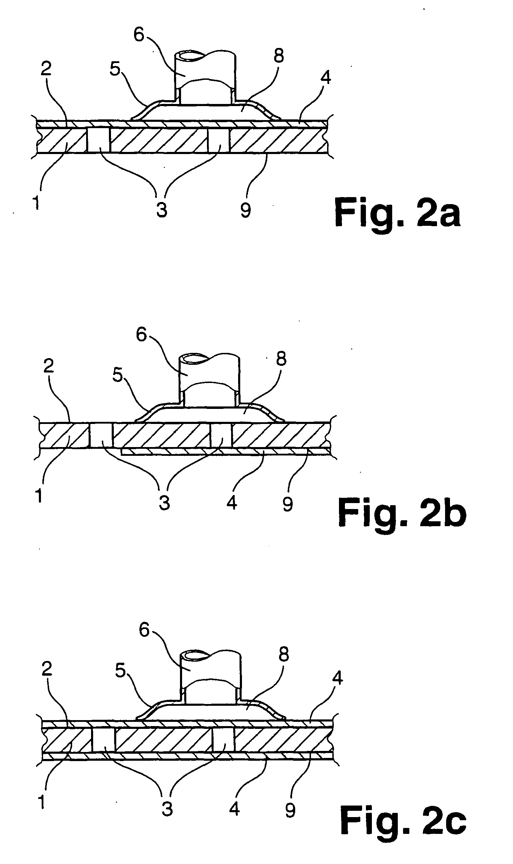

Figur 2a zeigt einen abgebrochenen Schnitt des Lochbleches 1 und des Saugers 5 gemäß Figur 1 mit einem in Figur 1 durch die Linie I-I angedeuteten Schnittverlauf. Die Durchtrittsöffnungen 3 des Lochbleches 1 sind auf der dem Sauger 5 zugeordneten Werkstückoberseite 2 mit einer Folie 4 versehen.

In Figur 2b ist eine Variante dargestellt, bei der das Werkstück mit einer Folie 4 auf der dem Sauger 5 abgewandten Werkstückunterseite 9 versehen ist. In diesem Fall wird nur die in die Saugkammer 8 mündende Durchtrittsöffnung 3 mit einer Folie 4 abgedeckt. Figur 2c zeigt einen Anwendungsfall, bei dem das Werkstück auf der Werkstückoberseite 2 und auf der Werkstückunterseite 9 mit einer Folie 4 versehen ist.

Wird ein entsprechend Figur 2a mit einer Folie 4 auf der Werkstückoberseite 2 versehenes Lochblech 1 bei dem anschließenden Manipulieren in Querrichtung der Werkstückoberseite 2 angehoben, so muss sichergestellt sein, dass die Folie 4 fest genug mit dem Werkstück verbunden ist, damit die notwendige Haltekraft von der Folie 4 auf das Werkstück übertragen werden kann, ohne dass sich die Folie 4 löst. Dies muss bei einer Folie 4, die entsprechend Figur 2b auf der Werkstückunterseite 9 angebracht ist, nicht in gleicher Weise berücksichtigt werden. Da in diesem Fall der Sauger 5 in direktem Kontakt mit dem Werkstück auf der Werkstückoberseite 2 angelegt wird. Zudem wird die Folie 4 bei dieser Variante durch den Unterdruck in der Saugkammer 8 über die Durchtrittsöffnungen 3 zum Werkstück hingezogen. Somit ist es sogar möglich, die Folie 4 nur lose an das Werkstück anzulegen.

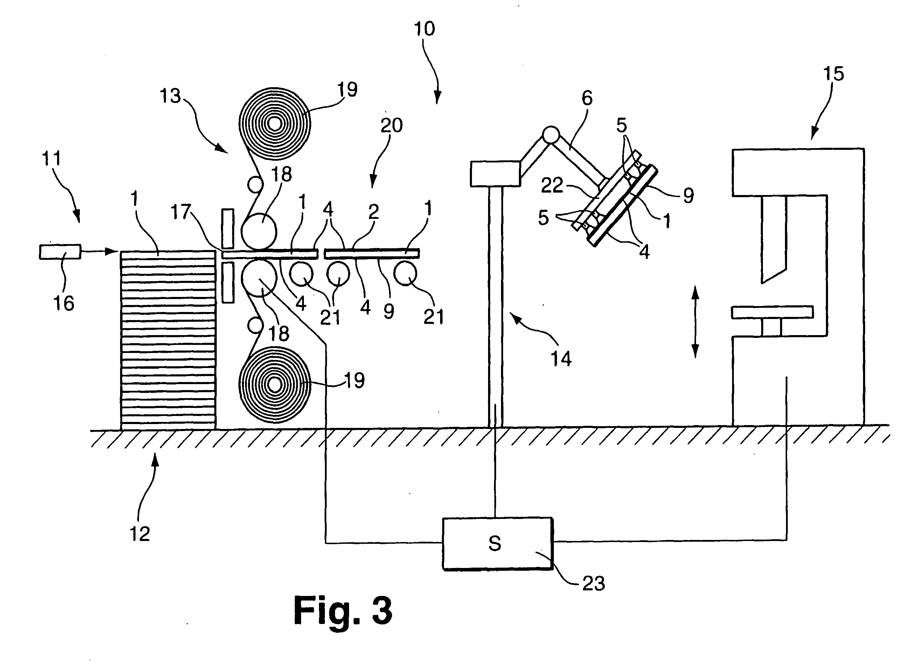

In Figur 3 ist eine maschinelle Anordnung 10 zum Handhaben eines Lochbleches 1 dargestellt. Teile, die Teilen der Figuren 1 und 2a bis 2c entsprechen, tragen gleiche Bezugszeichen, auch wenn sie in leicht abgewandelter Form dargestellt sind. Die maschinelle Anordnung 10 umfasst eine Entstapelungsvorrichtung 11 zum Entstapeln von in einem Stapel 12 bereitgestellten Lochblechen 1, eine Abdeckeinheit 13, einen Manipulator 14 und eine Bearbeitungsvorrichtung 15.

Die einzelnen Schritte des mit der in Figur 3 dargestellten maschinellen Anordnung 10 durchgeführten Verfahrens werden nun im Einzelnen beschrieben.

Zu Beginn wird das Lochblech 1, das auf dem Stapel 12 zuoberst liegt, mit der Entstapelungsvorrichtung 11 dem Stapel 12 entnommen. Hierzu wird das Lochblech 1 mit einem Ausschiebezylinder 16 durch einen Spalt 17 von dem Stapel 12 in die Abdeckeinheit 13 geschoben. Die Spaltbreite des Spaltes 17 ist in einer solchen Weise auf die Dicke des Lochbleches 1 abgestimmt, dass immer nur ein einzelnes Lochblech 1 den Spalt 17 passieren kann.

In der Abdeckeinheit 13 wird das Lochblech 1 mit einer Abdeckung versehen. Im dargestellten Ausführungsbeispiel handelt es bei der Abdeckeinheit 13 um eine Folienbeschichtungseinheit. In der Folienbeschichtungseinheit wird eine selbstklebende dehnbare und hochflexible Folie 4 aus Kunststoff mittels Anpresswalzen 18 von Folienrollen 19 abgezogen und von den Anpresswalzen 18 auf das Lochblech 1 gedrückt. Dabei wird die Folie 4 sowohl auf die Werkstückoberseite 2 des Lochbleches 1 als auch auf die Werkstückunterseite 9 des Lochbleches 1 aufgeklebt. Es kann aber auch ausreichend sein, die Folie nur auf der Werkstückoberseite 2 oder nur auf der Werkstückunterseite 9 anzubringen. Die folienbeschichteten Lochbleche 1 werden anschließend in eine Abholposition 20 verbracht. Dort werden sie auf Auflagerollen 21 gelagert.

Im Ausführungsbeispiel der Figur 3 sind am Manipulatorarm 6 mehrere Sauger 5 auf einer Saugerplatte 22 angebracht. In der Abholposition 20 werden die Sauger 5 an dem Lochblech 1 zur Anlage gebracht. Zu diesem Zweck werden die Sauger 5 auf der Saugerplatte 22 mittels des Manipulators 14 in eine entsprechende Position verschwenkt und auf das Lochblech 1 absenkt. Nachdem mittels des in Figur 3 nicht gezeigten Unterdruckerzeugers 7 der maschinellen Anordnung 10 in den Saugkammern 8 der Sauger 5 ein Unterdruck erzeugt wurde, ist das Lochblech 1 mit einer Haltekraft an den Saugern 5 festgelegt. Nun kann das festgelegte Lochblech 1 der Bearbeitungsvorrichtung 15 zugeführt werden. Dabei ist es möglich, dass das festgelegte Lochblech 1 nicht nur der Bearbeitungsvorrichtung 15 zugeführt, sondern auch mittels des Manipulators 14 während der Bearbeitung gehalten und positioniert wird.

Um einen vollautomatischen Betrieb der maschinellen Anordnung 10 zu ermöglichen, ist eine numerische Steuerungseinheit 23 vorgesehen, die für ein abgestimmtes Arbeiten der verschiedenen Einheiten sorgt.

Handelt es sich bei der Bearbeitungsvorrichtung 15 beispielsweise um eine Biegeeinheit oder eine Schneideinheit, so kann die Folie 4 weitere Vorteile mit sich bringen. Bei der Bearbeitung von Werkstücken durch Biegeeinheiten oder Schneideinheiten tritt häufig das Problem auf, dass an dem Werkstück durch die Bearbeitungswerkzeuge oder andere Maschinenteile unerwünschte Kratzer oder Abdrücke erzeugt werden. Durch die mit dem Werkstück verbundene Abdeckung ist ein materialschonendes Bearbeiten möglich, da die Abdeckung das Werkstück vor Kratzern und Abdrücken schützt.

Abweichend von der in Figur 3 dargestellten maschinellen Anordnung 10 kann eine Abdeckeinheit 13 auch so angeordnet sein, dass ein Werkstück, das sich außen in einem Stapel befindet, mit einer Abdeckung versehen werden kann, ohne dass das Werkstück zuvor dem Stapel entnommen werden muss. Nachdem das in dem Stapel mit der Abdeckung versehene Werkstück und die Sauger eines Manipulators aneinander festgelegt wurden, kann das Werkstück mittels des Manipulators zum anschließenden Manipulieren von dem Stapel abgehoben werden.

In einer weiteren nicht dargestellten Variante umfasst das erfindungsgemäße Verfahren einen zusätzlichen Verfahrensschritt, bei dem die Abdeckung abschließend vom Werkstück entfernt wird. Dies kann manuell durch einen Bediener erfolgen, aber auch automatisiert mittels einer Entfemungseinheit der maschinellen Anordnung durchgeführt werden.

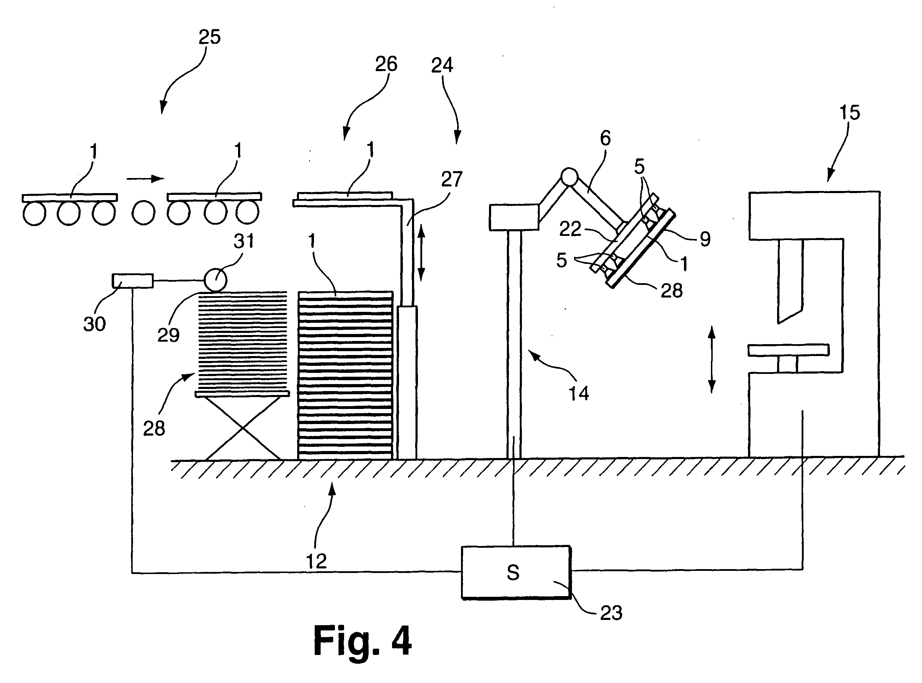

In Figur 4 ist eine zweite maschinelle Anordnung 24 zum Handhaben eines Lochbleches 1 dargestellt. Teile, die Teilen der Figuren 1, 2a bis 2c und 3 entsprechen, tragen gleiche Bezugszeichen, auch wenn sie in leicht abgewandelter Form dargestellt sind. Die maschinelle Anordnung 24 umfasst eine, beispielsweise einer Stanzmaschine nachgeordnete, Zuführvorrichtung 25 zum Zuführen von Lochblechen 1, eine Stapeleinrichtung 26 zum Stapeln der Lochbleche 1, einen Manipulator 14 und eine Bearbeitungsvorrichtung 15. Die Stapeleinrichtung 26 besitzt eine Ablegevorrichtung 27 zum Ablegen der zugeführten Lochbleche 1 auf den Stapel 12, neben dem Stapel 12 mit den Lochblechen 1 einen Stapel 28 mit als Abdeckungen dienenden Papierzwischenlagen 29 und eine Schiebevorrichtung 30 mit einer angetriebenen Walze 31 zum Verschieben der zuoberst liegenden Papierzwischenlage 29 auf den Stapel 12.

Der Ablauf des Verfahrens zum Handhaben eines Werkstückes mit der maschinellen Anordnung 24 nach Figur 4 wird nun im Einzelnen beschrieben. Zunächst werden die Lochbleche 1 mittels der Zuführvorrichtung 25 der Stapeleinrichtung 26 zugeführt. In der Stapeleinrichtung 26 werden die Lochbleche 1 abwechselnd mit den Papierzwischenlagen 29 auf den Stapel 12 abgelegt, so dass an jeder Lochblechunterseite eine Papierzwischenlage 29 anliegt. Das zuoberst auf dem Stapel 12 liegende Lochblech 1 und die Sauger 5 werden aneinander zur Anlage gebracht. Nachdem mittels des in Figur 4 nicht gezeigten Unterdruckerzeugers 7 der maschinellen Anordnung 24 in den Saugkammern 8 der Sauger 5 ein Unterdruck erzeugt wurde, ist das Lochblech 1 mit einer Haltekraft an den Saugern 5 festgelegt. Zumindest eine Durchtrittsöffnung 3 des Lochbleches 1 ist wenigstens teilweise mit der an der Lochblechunterseite anliegenden Papierzwischenlage 29 versehen. Durch den Unterdruck wird die Papierzwischenlage 29 an dem Lochblech 1 gehalten, wodurch gewährleistet ist, dass der Unterdruck auch beim nachfolgenden Manipulieren des Lochbleches 1 erhalten bleibt.

Wie in der maschinellen Anordnung 10 nach Figur 3 ist auch in der maschinellen Anordnung 24 nach Figur 4 eine numerische Steuerungseinheit 23 vorgesehen, die für ein abgestimmtes Arbeiten der verschiedenen Einheiten sorgt.

## Patentansprüche

1. Verfahren zum Handhaben eines Werkstückes mit zumindest einer Durchtrittsöffnung (3), wobei wenigstens ein Sauger (5) und das Werkstück unter Ausbildung einer Saugkammer (8) aneinander angelegt werden und in der Saugkammer (8) ein Unterdruck erzeugt wird, um das Werkstück und den Sauger für ein anschließendes Manipulieren des Werkstückes mit einer Haltekraft aneinander festzulegen, **dadurch gekennzeichnet, dass** das Werkstück und der Sauger (5) mit einer Haltekraft aneinander festgelegt werden, indem das Werkstück an zumindest einer in die Saugkammer (8) mündenden Durchtrittsöffnung (3) des Werkstückes wenigstens teilweise mit einer Abdeckung (4) versehen wird, welche nach dem Erzeugen des Unterdrucks den Luftdurchfluss durch die Durchtrittsöffnung (3) zur Saugkammer (8) hin reduziert und **dadurch** in dieser Saugkammer (8) den Aufbau eines eine Haltekraft erzeugenden Unterdruckes bewirkt.

2. Verfahren nach Anspruch 1 zum Handhaben eines ebenen Werkstückes mit zumindest einer Durchtrittsöffnung (3), insbesondere zum Handhaben eines Lochbleches (1).

3. Verfahren nach einem der vorhergehenden Ansprüche, **dadurch gekennzeichnet, dass** zumindest eine Durchtrittsöffnung (3) wenigstens teilweise mit einer Abdeckung (4) versehen wird, indem die Abdeckung mit dem Werkstück lösbar verbunden wird.

4. Verfahren nach einem der vorhergehenden Ansprüche, **dadurch gekennzeichnet, dass** zumindest eine Durchtrittsöffnung (3) wenigstens teilweise mit einer flächigen Abdeckung, insbesondere mit einer Abdeckung in Form einer Folie (4), versehen wird.

5. Verfahren nach einem der vorhergehenden Ansprüche, **dadurch gekennzeichnet, dass** zumindest eine Durchtrittsöffnung (3) wenigstens teilweise mit einer Abdeckung (4) versehen wird, indem zumindest eine Werkstückseite (2, 9) im Wesentlichen vollständig mit der Abdeckung versehen wird.

6. Verfahren nach einem der vorhergehenden Ansprüche, **dadurch gekennzeichnet, dass** der Sauger (5) und ein in einem Stapel (12) angeordnetes Werkstück aneinander angelegt werden, nachdem zumindest eine Durchtrittsöffnung (3) des Werkstückes wenigstens teilweise mit einer Abdeckung versehen worden ist.

7. Verfahren nach einem der vorhergehenden Ansprüche, **dadurch gekennzeichnet, dass** der Sauger (5) und ein in einem Stapel (12) bereitgestelltes Werkstück aneinander angelegt werden und dass zumindest eine Durchtrittsöffnung (3) des Werkstückes vor oder bei oder nach einem Entstapeln des Werkstückes wenigstens teilweise mit einer Abdeckung versehen wird.

8. Verfahren nach einem der vorhergehenden Ansprüche, **dadurch gekennzeichnet, dass** nachdem das Werkstück und der Sauger (5) aneinander mit einer Haltekraft festgelegt wurden, bei dem anschließenden Manipulieren das an zumindest einer Durchtrittsöffnung (3) wenigstens teilweise mit einer Abdeckung versehene Werkstück einer Bearbeitungsvorrichtung (15), insbesondere einer Biege- oder einer Schneidvorrichtung, zugeführt wird.

9. Maschinelle Anordnung zum Handhaben eines Werkstückes mit zumindest einer Durchtrittsöffnung (3), wobei die maschinelle Anordnung (10) einen Sauger (5) aufweist und der Sauger (5) und das Werkstück unter Ausbildung einer Saugkammer (8) aneinander anlegbar sind und in der Saugkammer (8) mittels eines Unterdruckerzeugers (7) der maschinellen Anordnung (10) ein Unterdruck erzeugbar ist, um das Werkstück und den Sauger (5) für ein anschließendes Manipulieren des Werkstückes mit einer Haltekraft aneinander festzulegen, **dadurch gekennzeichnet, dass** das Werkstück und der Sauger (5) mit einer Haltekraft aneinander festlegbar sind, indem das Werkstück an zumindest einer in die Saugkammer (8) mündenden Durchtrittsöffnung (3) des Werkstückes wenigstens teilweise mit einer Abdeckung (4) versehbar ist, welche nach dem Erzeugen des Unterdrucks den Luftdurchfluss durch die Durchtrittsöffnung (3) zur Saugkammer (8) hin reduziert und **dadurch** in dieser Saugkammer (8) den Aufbau eines eine Haltekraft erzeugenden Unterdruckes bewirkt.

10. Maschinelle Anordnung nach Anspruch 9, **dadurch gekennzeichnet, dass** zumindest eine Durchtrittsöffnung (3) des Werkstückes mittels einer Abdeckeinheit (13), insbesondere mittels einer Folienbeschichtungseinheit, wenigstens teilweise mit einer Abdeckung (4) versehbar ist.

11. Maschinelle Anordnung nach Anspruch 10, **dadurch gekennzeichnet, dass** der Sauger (5) und ein in einem Stapel (12) angeordnetes Werkstück aneinander anlegbar sind und dass die Abdeckeinheit (13) einer Entstapelungsvorrichtung (11) zum Entstapeln des Werkstückes zugeordnet ist.

## Claims

1. A method for handling a workpiece having at least one through-opening (3), wherein at least one sucker (5) and the workpiece are placed against each other to form a suction chamber (8) and a vacuum is generated in the suction chamber (8) in order to fix the workpiece and the sucker (5) to each other with a holding force for subsequent manipulation of the workpiece, **characterised in that** the workpiece and the sucker (5) are fixed to each other with a holding force by at least partially providing the workpiece at at least one through-opening (3) of the workpiece opening into the suction chamber (8) with a covering which reduces the flow of air through the through-opening (3) to that suction chamber (8) after the vacuum has been generated thus effecting **in that** suction chamber (8) the development of a vacuum which gives rise to a holding force.

2. A method according to claim 1 for handling a flat workpiece having at least one through-opening (3), especially for handling a perforated metal sheet (1).

3. A method according to any one of the preceding claims, **characterised in that** at least one through-opening (3) is at least partially provided with a covering by detachably joining the covering to the workpiece.

4. A method according to any one of the preceding claims, **characterised in that** at least one through-opening (3) is at least partially provided with a planar covering, especially with a covering in the form of a film (4).

5. A method according to any one of the preceding claims, **characterised in that** at least one through-opening (3) is at least partially provided with a covering by providing at least one side (2, 9) of the workpiece substantially completely with the covering.

6. A method according to any one of the preceding claims, **characterised in that** the sucker (5) and a workpiece that is disposed in a stack (12) are placed against each other after at least one through-opening (3) of the workpiece has been at least partially provided with a covering.

7. A method according to any one of the preceding claims, **characterised in that** the sucker (5) and a workpiece that is provided in a stack (12) are placed against each other and at least one through-opening (3) of the workpiece is at least partially provided with a covering before or during or after destacking of the workpiece.

8. A method according to any one of the preceding claims, **characterised in that**, after the workpiece and the sucker (5) have been fixed to each other with a holding force, on being subsequently manipulated the workpiece at least partially provided with a covering at at least one through-opening (3) is fed to a processing device (15), especially a bending device or a cutting device.

9. A mechanical arrangement for handling a workpiece having at least one through-opening (3), wherein the mechanical arrangement (10) has a sucker (5) and the sucker (5) and the workpiece can be placed against each other to form a suction chamber (8) and a vacuum can be generated in the suction chamber (8) by means of a vacuum generator (7) of the mechanical arrangement (10) in order to fix the workpiece and the sucker (5) to each other with a holding force for subsequent manipulation of the workpiece, **characterised in that** the workpiece and the sucker (5) can be fixed to each other with a holding force by means of the fact that at the workpiece at least one through-opening (3) of the workpiece opening into the suction chamber (8) can be at least partially provided with a covering in order to reduce the flow of air through the through-opening (3) to that suction chamber (8) after the vacuum has been generated thus effecting **in that** suction chamber (8) the development of a vacuum which gives rise to a holding force.

10. A mechanical arrangement according to claim 9, **characterised in that** at least one through-opening (3) of the workpiece can be provided at least partially with a covering by means of a covering unit (13), especially by means of a film coating unit.

11. A mechanical arrangement according to claim 10, **characterised in that** the sucker (5) and a workpiece that is disposed in a stack (12) can be placed against each other and the covering unit (13) is associated with a destacking device (11) for destacking the workpiece.

## Revendications

1. Procédé pour manipuler une pièce usinée comportant au moins un orifice de passage (3), au moins une ventouse (5) et ladite pièce étant plaquées l'une contre l'autre en formant une chambre d'aspiration (8), et une dépression étant générée, dans ladite chambre d'aspiration (8), pour assujettir la pièce et la ventouse l'une à l'autre par une force de retenue, en vue d'une manipulation consécutive de ladite pièce, **caractérisé par le fait que** la pièce et la ventouse (5) sont assujetties l'une à l'autre, par une force de retenue, en munissant au moins partiellement la pièce, au niveau d' au moins un orifice de passage (3) de ladite pièce, débouchant dans la chambre d'aspiration (8), d'un élément de recouvrement (4) qui, après la génération de la dépression, diminue la circulation d'air gagnant ladite chambre d'aspiration (8) en empruntant ledit orifice de passage (3), et qui provoque ainsi, dans cette chambre d'aspiration (8), la génération d'une dépression développant une force de retenue.

2. Procédé selon la revendication 1, destiné à la manipulation d'une pièce usinée plane comportant au moins un orifice de passage (3), notamment à la manipulation d'une tôle perforée (1).

3. Procédé selon l'une des revendications précédentes, **caractérisé par le fait qu'**au moins un orifice de passage (3) est muni, au moins en partie, d'un élément de recouvrement (4) en reliant amoviblement ledit élément de recouvrement à la pièce usinée.

4. Procédé selon l'une des revendications précédentes, **caractérisé par le fait qu'**au moins un orifice de passage (3) est muni, au moins en partie, d'un élément aplati de recouvrement, notamment d'un élément de recouvrement revêtant la forme d'un feuil (4).

5. Procédé selon l'une des revendications précédentes, **caractérisé par le fait qu'**au moins un orifice de passage (3) est muni, au moins en partie, d'un élément de recouvrement (4) en ce sens qu'au moins une face (2, 9) de la pièce usinée est pourvue, pour l'essentiel intégralement, dudit élément de recouvrement.

6. Procédé selon l'une des revendications précédentes, **caractérisé par le fait que** la ventouse (5), et une pièce usinée située dans une pile (12), sont plaquées l'une contre l'autre après qu'au moins un orifice de passage (3) de ladite pièce a été, au moins en partie, muni d'un élément de recouvrement.

7. Procédé selon l'une des revendications précédentes, **caractérisé par le fait que** la ventouse (5), et une pièce usinée en attente dans une pile (12), sont plaquées l'une contre l'autre ; et **par le fait qu'**au moins un orifice de passage (3) de ladite pièce est muni au moins en partie d'un élément de recouvrement avant, pendant ou après une dissociation de ladite pièce d'avec ladite pile.

8. Procédé selon l'une des revendications précédentes, **caractérisé par le fait que**, lors de la manipulation consécutive, après que la pièce usinée et la ventouse (5) ont été assujetties l'une à l'autre par une force de retenue, ladite pièce, au moins partiellement munie d'un élément de recouvrement au niveau d'au moins un orifice de passage (3), est dirigée vers un dispositif d'usinage (15), notamment un dispositif de cintrage ou de découpage.

9. Dispositif mécanique pour manipuler une pièce usinée comportant au moins un orifice de passage (3), ledit dispositif mécanique (10) présentant une ventouse (5), et ladite ventouse (5) et ladite pièce pouvant être plaquées l'une contre l'autre en formant une chambre d'aspiration (8), et une dépression pouvant être générée dans ladite chambre d'aspiration (8), au moyen d'un générateur de dépression (7) dudit dispositif mécanique (10), de manière à assujettir l'une à l'autre la pièce et la ventouse (5), par une force de retenue, en vue d'une manipulation consécutive de ladite pièce, **caractérisé par le fait que** la pièce et la ventouse (5) peuvent être assujetties l'une à l'autre, par une force de retenue, grâce à la faculté de munir au moins partiellement la pièce, au niveau d' au moins un orifice de passage (3) de ladite pièce, débouchant dans la chambre d'aspiration (8), d'un élément de recouvrement (4) qui, après la génération de la dépression, diminue la circulation d'air gagnant ladite chambre d'aspiration (8) en empruntant ledit orifice de passage (3), et qui provoque ainsi, dans cette chambre d'aspiration (8), la génération d'une dépression développant une force de retenue.

10. Dispositif mécanique selon la revendication 9, **caractérisé par le fait qu'**au moins un orifice de passage (3) de la pièce usinée peut être au moins partiellement muni d'un élément de recouvrement (4) au moyen d'une unité de recouvrement (13), notamment au moyen d'une unité de revêtement par feuils.

11. Dispositif mécanique selon la revendication 10, **caractérisé par le fait que** la ventouse (5), et une pièce usinée située dans une pile (12), peuvent être plaquées l'une contre l'autre ; et **par le fait que** l'unité de recouvrement (13) est associée à un dispositif (11) visant à dissocier ladite pièce d' une pile.
